(19) Europäisches Patentamt
European Patent Office
Office européen des brevets

(11) **EP 3 038 366 A1**

(12) **EUROPEAN PATENT APPLICATION**

(43) Date of publication:
**29.06.2016 Bulletin 2016/26**

(21) Application number: **14307118.1**

(22) Date of filing: **22.12.2014**

(51) Int Cl.:
*H04N 21/2343* (2011.01)    *H04N 21/24* (2011.01)
*H04N 21/442* (2011.01)    *H04N 21/443* (2011.01)
*H04N 21/6336* (2011.01)    *H04N 21/6379* (2011.01)
*H04N 21/845* (2011.01)    *H04N 19/46* (2014.01)
*H04N 19/132* (2014.01)    *H04N 19/156* (2014.01)
*H04N 19/164* (2014.01)    *H04N 21/4728* (2011.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Stevens, Christoph**
**2018 Antwerpen (BE)**

• **Rondao Alface, Patrice**
**2018 Antwerpen (BE)**
• **Macq, Jean-François**
**2018 Antwerpen (BE)**

(74) Representative: **ALU Antw Patent Attorneys**
**Intellectual Property and Standards**
**Copernicuslaan 50**
**2018 Antwerp (BE)**

(54) **Devices and method for video compression and reconstruction**

(57)    A sender device (S) is adapted to receive a high resolution video (HRV) and to generate a reduced resolution video (RRV) by down sampling said high resolution video (HRV), said sender device is further adapted to select successive high resolution blocks (HRBjs) from successive frames of said high resolution video (HRV), and to encode said reduced resolution video (RRV) and said selected successive high resolution blocks (HRBs) for further transmission to a receiver device (R), said sender device (S) is further adapted to control the down sampling of said high resolution video as being dependent upon a feedback signal from said receiving device, said feedback signal comprising information related the remaining battery lifetime of said receiving device, said sender device further being operational to adapt the selection of said successive high resolution blocks based on said feedback signal.

A receiver device (R) for reconstructing the high resolution video from the received encoded video stream from the sender is set out as well.

Fig. 1c

**Description**

The present invention relates to devices and a method for video compression and reconstruction.

In present high resolution video transmission systems sometimes the decoder side device may have limited battery power and/or limited computational power. This can be the case for handheld devices such as a laptop, a tablet, a smart phone, a game console or the like. Especially in situations where a video is transmitted from a powerful encoder, e.g. a server in the cloud, or a fixed computer, the limited battery and/or limited computational capability of the receiving handheld device may put a burden on the received decoded quality as the handheld device may lack the necessary power and/or processing resources to properly decode such a huge video file.

The problem even becomes more pronounced when, as a consequence of a very powerful encoding, decoding such a highly compressed received bit stream also requires high computational resources. Choosing a low power encoder with limited compression performance will lower the processing power related to the decoding process, but due to the increase in the data rate resulting from a less optimal encoding, the power consumption of the receiver is raised again.

Existing approaches consist in sacrificing quality for reducing power consumption in the decoder/receiver. Either this can be done by selecting very high quantization parameters at the encoder side, which preserves the original high resolution video but with possibly unacceptable distortions since encoders like H.264/AVC or H.265/HEVC introduce undesirable blocking artifacts when the specified encoding rate is too low for a given resolution. Alternatively this can be done by reducing the video resolution and/or frame rate by the spatial or temporal sub-sampling. In this case less severe quantization parameters can be used. However the sub-sampling results in quality losses too.

It is therefore an object of embodiments of the present invention to provide devices and a method which are able to solve the aforementioned problems of the state of the art.

According to embodiments of the invention this object is achieved by the provision of a sender device in accordance to claim 1 which is cooperatively coupled to a receiver device as set out in claim 7.

In this way feedback from the receiver with respect to its inherent limitations on power consumption is taken into account during the generation of an encoded compressed stream, while still allowing to reconstruct, in the most optimum way, the high resolution video in the receiver.

In an embodiment the sender is further adapted identify further parameters to be provided with said selected successive high resolution blocks for further transmission to said receiver, said parameters enabling the build-up of a high resolution block dictionary (MR) at said receiver taking into account receiver restrictions.

In another embodiment the sender is adapted to receive bandwidth information concerning the bandwidth of the communication link between the sender device and said receiver device, and to adapt the down-sampling and/or the block selection based on said bandwidth information.

In yet another embodiment the sender is able to emulate the reconstruction of the received high resolution video at the receiver, for comparing the emulated reconstructed video with the original high resolution video, and for further adapting the down sampling factor and/or the high resolution block selection based on said comparison result.

This allows to directly check the quality of the reconstruction of the video, in the sender itself, further allowing to rapidly adapt the operation point with respect to down sampling factor, and/or selection of the blocks for again improving the reconstruction.

In another embodiment the sender device is adapted to emulated the reconstruction of the received high resolution video in the receiver for each receiver to which the sender is coupled to.

As the sender has enough resources, it can even share them to emulate, for each receiver coupled to the server, their behavior, such as to quickly adapt to changing conditions at one or all of these receivers. This further enables to optimally share or use resources in the sender too.

In another embodiment the sender is adapted to provide further metadata information concerning the down sampling and encoding and the build-up of said high resolution block memory to said receiver device.

The present invention relates as well to embodiments of a method for compressing a high resolution input video stream in a sender for further transmission to a receiver, and to embodiments of a method for reconstructing from the received stream from the sender, the high resolution video in a receiver.

The present invention relates as well to embodiments of a computer program for performing the above mentioned methods, and to embodiments of a computer readable storage medium comprising instructions to cause a data processing apparatus to carry out such a program.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:

Figs. 1a-d schematically show embodiments of a transmitter and receiver in accordance to the present invention,
Fig. 2 shows a more detailed implementation of the DBUS module of the receiver,
Fig. 3 shows another more sophisticated implementation of this DBUS module of the receiver.

It is to be remarked that the following merely illustrates the principles of the invention. It will thus be appreciated that those skilled in the art will be able to devise various arrangements that, although not explicitly described or shown herein, embody the principles of the invention. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

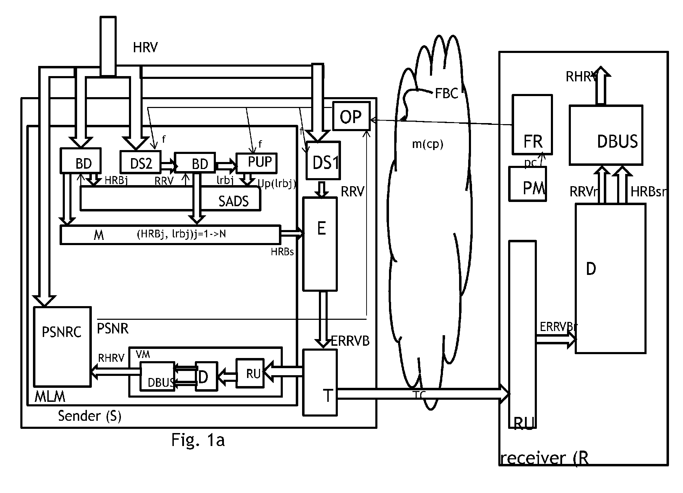

Figs. 1a-d schematically show a sender S which is receiving a high resolution video HRV from a high resolution video capturing device or from a storage device (both not shown on the figures). Resolution is to be understood in this entire document as encompassing spatial resolution, e.g. 720p, 1080p, 4K, 8K etc, temporal resolution related to the frame rate, color resolution (e.g. YUV 4:4:4, YUV 4:2:0), bit depth resolution (e.g. usual 8 bit per color channel to 10 or 12 bit High Dynamic Range content), quality resolution (pixel accuracy), frequency resolution (multispectral, hyper spectral), view resolution (multi-view coding) etc.

The sender is able to encode and transmit the high quality video to a receiver R using a traditional encoder. The receiver is however limited with respect to power and processing resources.

The sender and receiver are coupled to each other via a communications network, as depicted by the cloud in figs. 1a-d. This communications network can be any type of communications network, e.g. a fixed network, mobile network, satellite network, or any type of combination of such networks.

To yet establish a good communication between both sender and receiver device, the receiver provides information with respect to its actual power consumption and/ or remaining battery lifetime. Moreover at onset of the connection, the sender receives from the receiver capabilities of the presence and type of decoder, available memory, processor type in the receiver.

This information is denoted m(cp) and is provided from the receiver to the sender via a feedback channel , denoted FBC.

Upon receipt of such information, denoted m(cp) on figs. 1a-c, the sender determines, e.g. by means of a module denoted OP , a down sampling factor to be applied on a first down sampling device DS1, e.g. a sub-sampling filter. The down sampling factor is denoted f, and is thus provided by OP to DS1, upon which receipt, DS1 starts to down sample the high resolution video content with this factor.

Later on, in the receiver, an up sampling is then applied using a same factor. This factor has to be communicated by the sender to the receiver, but this can be done e.g. via metadata in the header of the encapsulated video stream transmitted to the receiver.

In an embodiment adaptive down sampling filters can be used for DS1. This allows to take into account a changing down sampling factor, for instance if the power consumption in the receiver would be too high. Information with respect to the power consumption and for remaining receiver battery lifetime is provided continuously from the receiver to the sender, e.g. using this same feedback channel. In case the power consumption becomes too high in the receiver, module OP can then decide to select a higher down sampling factor.

In an embodiment the Receiver device R initializes a connection to the Sender and provides , e.g. via a manifest file, information related to device capabilities of the receiver. This information may thus embrace maximum displayable video spatial resolution, maximum displayable frame rate, maximum bit depth resolution, presence and type of decoders available (with and without hardware acceleration), Operation System type, memory capacity, remaining battery lifetime etc.. As the battery lifetime will change during the operation of the receiver, continuous updates of this value will thus also be provided by the receiver to the sender.

Module OP within the Sender will, based upon this receiver information, define an operational point, meaning parameters for down-sampling and encoding the high resolution video, taking into account the limitations of the receiver. Table 1 gives an example of how such an operating point can be determined. This table shows three modes of operation, each mode being related to a certain combination of spatial resolution, temporal resolution, bit depth resolution, decoder and profile, power-aware configuration of the encoder, dictionary size, initial dictionary threshold, up sampling capacity, threshold for remaining battery lifetime. The dictionary is a memory MR in the receiver for storing the high resolution blocks from the sender, and this will be explained more into detail in a further paragraph.

Table 1- Examples of Operational Modes with decreasing orders of complexity (* estimates just given as an illustration)

|  | Operational point 1 | Operational point 2 | Operational point 3 |
|---|---|---|---|
| Spatial resolution | Full 4K | 4K | HD |
| Temporal Resolution | Full 120 fps | 60 | 30 |
| Bitdepth Resolution | Full 10 bit | 8 | 8 |
| decoder Type and Profile | HEVC Main 10 | HEVC Main | AVC Baseline Profile |
| decoder Power-Aware config. | Random Access, no parallelization | Low Delay, Frame-based parallelism | Zero Latency, Slice-based parallelism |
| Dictionary size MRm | 1000 32x32 blocks | 100 32x32 blocks | 100 32x32 blocks |
| Standard upsampling Complexity | Equivalent to a 16 tap filter* | Equivalent to a 8 tap filter* | Equivalent to a 8 tap filter |
| Upsampling factor | 2 | 4 | 4 |
| Dictionary similarity threshold | 120 (SAD) | 200 (SAD) | 500 (SAD) |
| Remaining Battery Lifetime threshold | 20pc | 20pc | 20pc |
| Quality (PSNR) threshold | 39dB | 36dB | 32dB |

In a more simple embodiment some parameters related to this dictionary in the receiver can be omitted. In such an embodiment the receiver dictionary is merely a FIFO memory of a limited size MRm, in accordance to what the OP module had determined since comparing entries from large dictionaries again consume a lot of power.

Module OP may have stored this table in advance, and is adapted to determine another operational point, thus switch from one to another one, based on the evolution of the battery lifetime at the receiver.

It is to be remarked that the table as presented in this document is only an example, and that many other implementations and selected operating conditions are possible.

In an embodiment also the bandwidth of the communications link between T and RU of sender and receiver can be measured, which information can be provided to OP. The latter can then also adapt the down sampling rate, selection of the blocks, the maximum memory size, etc, based on these bandwidth limitations.

The encoder used in the sender may be selected , e.g. from a set of downloadable encoders or from a set of predefined encoders present in the sender, for performing the opposite function of the decoder available in the receiver. The down sampling filter characteristics of DS1 in the sender are to be selected in accordance with the up -sampling filter capabilities in the receiver. However, as is clear from table 1, also the receiver can have several capabilities, e.g. up sampling in the receiver can, according to operation point 1, use a 16 tap filter, corresponding to an up-sampling factor of 2, operation points 2 and 3 correspond to a 8 tap filter, corresponding to an up-sampling factor of 4.

As illustrated in Figs. 1a-d, the Sender S receives the high quality high resolution video stream, denoted HRV, and performs a down sampling operation of the video, in a first down sampling module DS1, to a reduced resolution, producing a reduced resolution video stream, denoted RRV , in accordance to one of the selected operating modes.

OP then initializes a machine learning module, denoted MLM in figs. 1a-d, which contains a memory M, for storing pairs of high resolution blocks, denoted HRBj, and their associated down sampled counterparts, denoted lrbj. Its contents is progressively sent (e.g. one high resolution block per transmitted low resolution frame) to the Receiver.

The Sender therefore encodes both the RRV and selected high resolution blocks, denoted HRBs, of the memory altogether in one encoded stream ERRVB. The sender contains a transmission and encapsulation unit, denoted T, for encapsulation this encoded stream EERVB into one stream for transmission over a communications network to the receiver. This encapsulated stream is denoted TC. Alternatively the sender can encode the blocks separate from the RRV and transmit them in two separate files to the receiver.

The Receiver contains a receiving unit RU adapted to receive TC, and to de-capsulate this for obtaining the encoded stream ERRVB. Due to transmission errors, this stream may be different from the original ERRVB at the sender, therefore this is denoted ERRVBr. This stream is provided to a decoder D which will decode this stream into the received low resolution video, denoted RRVr, and into successive received selected high resolution blocks, denoted HRBsr. The receiver will store these high resolution blocks into a memory, called receiver dictionary MR. This memory is part of a module denoted DBUS, which will be explained more into detail in a further paragraph.

The receiver further comprises a power monitoring module , denoted PM, adapted to continuously monitor the receiver power consumption and for remaining receiver battery lifetime, and to provide these values to the Sender, via a feedback module FR of the receiver. The measured power and/or remaining battery lifetime is provided as information or a signal denoted pc in figs. 1a-d, from PM to FR. The feedback module may also be adapted to communicate the initial receiver metadata to the operation point module OP in the sender via the feedback channel FBC.

In an embodiment the machine learning module MLM of the Sender contains a receiver virtualization module, denoted VM, for generating a reconstructed video, RHRVsimilar to the one of the receiver. MLM further contains a module, denoted PSNRC, adapted to compute a Peak Signal to Noise Ratio, abbreviated by PSNR, between the reconstructed video RHRV in the sender and the original high resolution video HRV. The output is denoted PSNR, and is provided back to the operational point determination module OP. PSNR values serve as a measure for the quality of reconstruction of the video in the receiver, which is, via the module VM, emulated in the sender. It will be explained in a further paragraph how these PSNR values will further influence the down sampling/ block selection and filling of the memory M.

The machine learning module MLM, further comprises a block decomposing module BD, adapted to decompose the high resolution frames of HRV into high resolution blocks , denoted HRBj. MLM further comprises a down-sampling module, denoted DS2, and similar to DS1, for down-sampling the high resolution video HRV to the same low resolution video stream RRV resulting from DS1. This is followed by another block decomposing module, also denoted BD, for obtaining low resolution blocks Irbj. These will next undergo an up sampling in a module denoted PUP, which performs the inverse operation of DS1 or DS2, thus up-sampling using the factor f, provided by the operation point module OP.

In an alternative embodiment RRV can also be fed back from DS1 to MLM, for undergoing the up-sampling back in PUP, followed by a block decomposition.

It is the aim to store N pairs of high-resolution with their associated low-resolution blocks, per frame, into the large sender memory M. N can be ranging from 1 to FP/4, where FP is the largest number of non-overlapping blocks that a frame can contain, which corresponds to the number of pixels of the frame divided by the number of pixels of a block. Alternatively N can also be determined as max(FP/4, Np) where Np is the number of blocks that can be used by at least two blocks of the reduced resolution video for the dictionary based up sampling in the receiver. This NP is then at least having a value of 2.

The selection of the N pairs per frame, for storing into the memory M is performed by calculating an error SAD value which is computed for a block Bi of high resolution and an associated block Bk of up-sampled low resolution length NxN as follows:

$$\text{SAD}(B_i, B_k) = \sum_{y=0}^{N-1} \sum_{x=0}^{N-1} |B_i(x, y) - B_k(x, y)| \qquad (1)$$

Other similarity measures can be used to compare the blocks e.g. using the sum of squared differences, the normalized cross correlation, etc.

Pairs of high and low resolution blocks are then sorted an the basis of the best SAD scores, thus giving the lowest SAD numbers, obtained between the HR and up sampled LR blocks. The selection is provided by means of a control signal back from SADS to the two BD modules, which then provide the selected blocks to M.

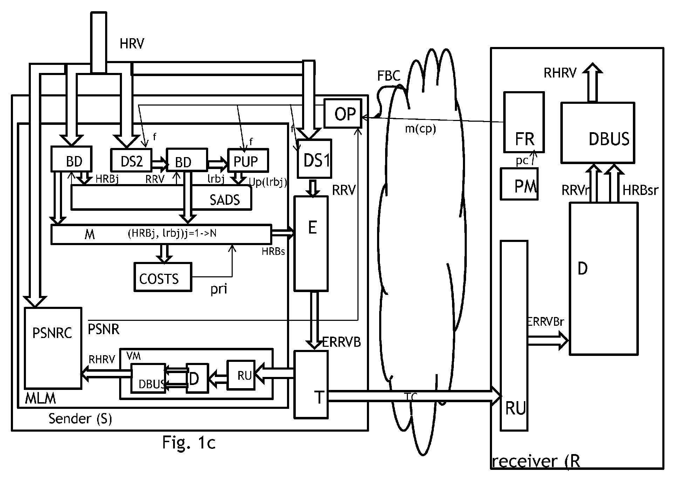

For each frame, the best High Resolution Block HRB from the best scoring pair of these N is provided to the encoder E, in some embodiments such as these of Figs. 1c-d possibly together with some extra data, e.g. pri, which will be described in a later paragraph. In the more simple embodiments of figs 1a-b, only the high resolution blocks are provided to E, which is adapted to encode this together with the RRV. The resulting encoded stream is denoted ERRVB. This selected block is denoted HRBs.

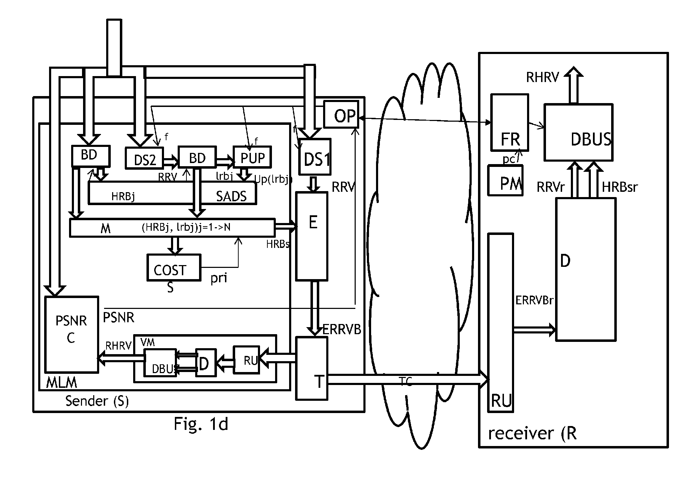

In an embodiment, the encoder E can be an AVC standard compliant encoder. To encode the RRV and the selected block HRBs, some preprocessing may be needed in the sense that, a special frame incorporating the block is to be created. This can be done by copying the block from its position in the high resolution frame picture and setting all possible remaining pixels to zero, thereby creating an auxiliary frame. Optionally, several blocks can be copied in the same auxiliary picture by copying blocks in raster scan order and adding metadata in the header specifying the size and top left position of each block, together with all necessary dictionary information metadata e.g. a priority_index that will be described later in this document. In case of the H.264/AVC codec, this RRV together with the auxiliary frames are encoded as one stream which is transmitted to the receiver. Information concerning the selected encoding scheme as well as the performed preprocessing is as well transmitted to the receiver, which, upon receipt will then be able to decode the auxiliary picture for retrieving the encoded patches. This information e.g. can be part of the encapsulated stream, as metadata. Alternatively this information may as well be provided in an initial signalization procedure between the sender and the receiver. In this case FBC needs to be a bi-directional communication channel for receiving and transmitting signaling messages in both directions. In the embodiment of Fig. 1d such a bi-directional signaling channel is present between OP and FR of sender and receiver; FR can then further extract the operational data for provision to the decoder and other modules in the receiver.

In another embodiment, the encoder is an enhanced WebM VP8 or VP9 encoder. In that case, the selected block can be encoded as a so-called alternative reference frame with a specific flag "show_frame" set to zero. This means that the HRBs block will be encoded as a reference frame but will not be displayed at the Receiver. In that case, it is also possible to encode one alternative reference frame for a set of a number of Q frames, by aggregating Q blocks into the same alternative reference frame, for example in raster scan order. This is useful to avoid setting the remainder of the alternative reference frame to zeros and further improve the compression performance. Typically if the size of the block is equal to KxK and the size of the alternative reference frame is MxM, then the number Q of blocks aggregated in one alternative reference frame will then be (M/K) times (M/K).

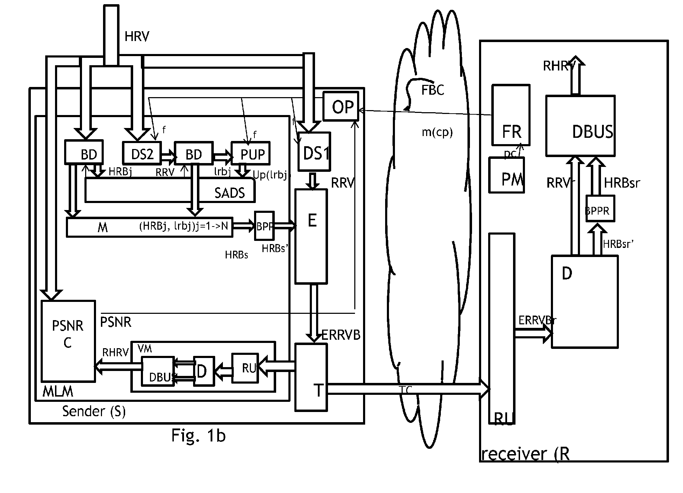

Also in this case some preprocessing is thus needed on the blocks. Fig. 1b shows an embodiment of the sender with a block preprocessing device, denoted BPP. The resulting frame is denoted HRBs', and this is then provided to the encoder.

Information with respect to the type of encoder as well as the associated block preprocessing is to be provided as well by the sender to the receiver. This can be under the form of metadata, or during initial signaling. In this case a bi-directional signaling channel is to be provided between S and R.

In another embodiment, the Extended Spatial Scalability of the Scalable Extension of H.264, named SVC, is exploited to encode the RRV as the base layer, and the blocks as a Region of Interest (ROI) that is coded as an enhancement layer. In this case the single encoded stream will comprise several layers.

It is clear from all mentioned cases that the choice taken by the sender concerning the encoding, and associated possible pre-processing of the blocks for making them compatible with the selected encoding scheme, may be provided to the receiver to, in order to enable the latter to perform the correct decoding an to perform some post-processing on the decoded frames containing the blocks.

In case of one stream leaving the encoder, such as depicted in figs. 1a-d, this stream EERVB can then be encapsulated separately using state of the art encapsulation protocols such as e.g. MPEG-TS, or encapsulated as a single stream using for example MMT (MPEG Media Transport). In case of two streams leaving the encoder, the transmission and encapsulation module also uses known techniques for generating a single transport stream denoted TC on figs. 1a-b. In an alternative embodiment (not shown on the figures) both RRV and HRBs can be encoded, encapsulated and transported separately under form of two separate streams.

The receiver device R comprises a receive and de-capsulation unit, denoted RU, to performs the de-capsulation, resulting in a received de-capsulated encoded stream denoted ERRVBr on figs 1a-d.

This stream is provided to a decoder D which is to perform the decoding operation. In the embodiment of Fig. 1b, the decoding of the received blocks will be followed by extra post- processing steps related to the earlier pre-processing of the blocks in the sender/encoder. In this figure the decoder may output received decoded frames comprising blocks, denoted HRBsr', which need to undergo some further post-processing in a module denoted BPPR, to extract or obtain therefrom the original blocks. In view of some decoding /transmission errors, the obtained decoded blocks are in general not identical to the selected patches in the encoder. They are for this reason denoted HRBsr.

The decoder D is associated to the previously performed encoding in the sender. The resulting decoded low resolution stream and decoded selected high resolution blocks are respectively denoted RRVr and HRBsr.

In one embodiment the decoder D therefore may comprise a H.264/AVC decoder that outputs both the decoded RRV stream, including the auxiliary pictures comprising decoded frames with selected HR blocks, which further have to undergo some processing for extracting there from the original HR blocks, denoted HRBsr.

In another embodiment, the decoder comprises an enhanced WebM VP8 or VP9 decoder that outputs a decoded stream comprising the decoded RRV and the alternative reference frames as a separate decoded video for the encoded blocks. Depending on which option was selected in the encoder, the decoded stream may contain some frames comprising a set of N aggregated blocks, which afterwards need to be extracted in to the N separate patches.

In another embodiment the decoder comprises a SVC decoder that outputs both as a base layer the decoded ERRVr, and the decoded enhancement layer that contains the selected HR blocks HRBsr. The blocks are then to be extracted from this enhancement layer as well.

The receiver R further comprises a video reconstruction module, denoted DBUS.

The latter takes as input the received reduced resolution video RRVr and the received high resolution blocks HRBsr. Its aim is to reconstruct the high resolution video, thus at the original resolution. The output of DBUS is denoted RHRV in Figs. 1a-d.

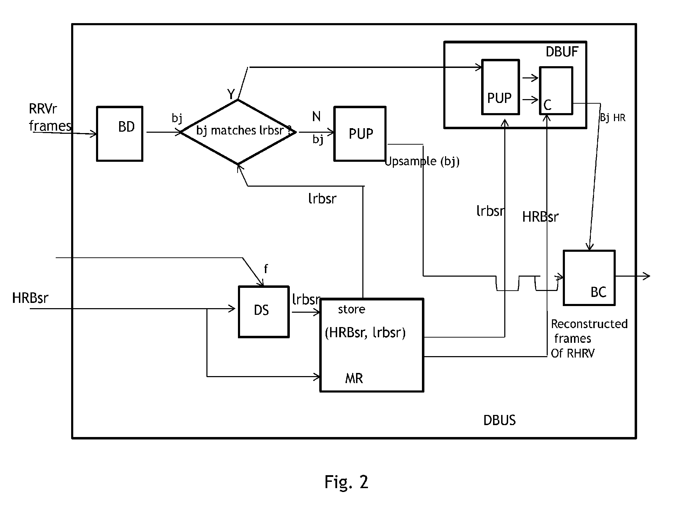

In an embodiment, depicted in Fig. 2, DBUS comprises a receiver dictionary, being a memory MR, for storing newly received blocks HRBsr, together with their associated low-resolution counterparts denoted Irbsr. The generation of Irbsr from HRBsr is performed by a down sampling module DS, similar to the ones used in the sender, thus similar to DS1 or DS2.

DBUS further comprises a block decomposer module, denoted BD. This module has as function to decompose successive RRVr frames into blocks that have the same size as the down-sampled blocks Irbsr of the dictionary. The successive blocks are denoted bj, and they are next compared with all stored down sampled blocks Irbsr, in order to check whether sufficiently matching blocks are present. Again here SAD or a Mutual Information criterion as explained in Maes, F., Collignon, A., Vandermeulen, D., Marchal, G., & Suetens, P. (1997) " Multimodality image registration by maximization of mutual information" in Medical Imaging, IEEE Transactions on, 16(2), 187-198,
or a correlation measure as set out in Lewis, J. P. (1995, May) " Fast normalized cross-correlation" in Vision interface (Vol. 10, No. 1, pp. 120-123)
can be used to check whether a block bj of a frame of RRVr corresponds to a certain Irbsr. In case the comparison yields a value that is higher or equal than a predetermined threshold, indicative that there is no Irbsr available in the dictionary, this block will undergo an up-sampling operation in a module PUP. This up sampling is a standard up sampling similar to the PUP used in the sender and the up-sampling factor should be the same as the down sampling factor of the sender. This value f is communicated by the sender to the receiver, either during initial signaling, either within the metadata of the encoded encapsulated video.

In case the result of the matching check, e.g. using SAD, indicated that the current block is very similar to one of the low-resolution blocks in the dictionary, an adapted value Bj will be calculated for this current block based on the formula :

$$Bj^{HR} = \text{upsample (bj)} + (HRBsr - \text{upsample (Irbsr )}) \qquad (2)$$

With upsample (Irbsr) meaning a standard re-upsampled version of the earlier downsampled Irbsr, again performed by a standard up-sampling module PUP, as the one used for the up-sampling of the blocks for which no matching patch was available in the dictionary. Also here the up sampling factor f may be communicated beforehand, or be extracted from metadata in the header.

The latter PUP module forms part of a module denoted DBUF for calculating an adaptive block value, based on the patch dictionary, and following equation (2) . According to (2) both the block bj, and Irbsr have to undergo the standard up-sampling, after which step an update for bj is calculated in module C.

It is to be noted that, although two separate standard up-sampling modules are shown in fig. 2, embodiments are possible where only one filter is present, which can then be shared. In this case good synchronization between both processes for the calculation of the updated blocks is to be foreseen.

Both standard up sampled as dictionary based up sampled blocks are then again recombined in module BC, for recombining the up sampled blocks. This can be done by creating a video frame at the reconstructed resolution and copying one by one each block at its corresponding position from the RRVr frame. In case blocks overlap, the average of the pixel values on the overlapping pixel positions from neighboring blocks is set in the reconstructed frame at the corresponding pixel position. Optionally a filter can be applied at block borders in the reconstructed frame, especially between blocks where one has been up sampled by the PUP filter and the other by the DBUF module.

In another embodiment of DBUS, updates of blocks for which a corresponding HR block is stored in the dictionary, can be computed based on the K closest LR/HR block pairs in the dictionary using Linear Local Embedding (LLE).

This involves the calculation of K coefficients wi which are computed by solving a linear system :

$$\text{vec(pri)} = A \text{ vec (wi)} \qquad (3)$$

where vec consists in building a vector of the pixels luminance values of the patch pri in one column in raster scan, A is a matrix constructed by vectors of the pixels values of each of the K closest patches in rows and vec(wi) is a vector containing the weights of each of the K closest patches and where the sum of weights wi is equal to 1.

The up sampled block bj is then computed as :

$$B_j^{HR} = \text{upsample } (b_j) + \sum_k w_k \, (HRBsr_k^{HR} - \text{upsample } (lrbsr_k^{LR})) \qquad (4)$$

Or alternatively as :

$$B_j^{HR} =$$

$$\text{low\_pass(upsample } (b_j)) + \text{high\_pass}(\sum_k w_k \, (HRBsr_k^{HR} - \text{upsample } (lrbsr_k^{LR})))$$

$$(5)$$

Where low_pass and high_pass are DCT based filters defined as follows

$$low\ pass\ (f) = iDCT(s_l)$$

$$s_l = \begin{cases} DCT(f)(x,y)\ if\ x < f_{cx}, y < f_{cy} \\ \qquad 0\ otherwise \end{cases}$$

$$high\ pass(f) = iDCT(s_h)$$

$$s_h = \begin{cases} DCT(f)(x,y)\ if\ x \geq f_{cx}, y \geq f_{cy} \\ \qquad 0\ otherwise \end{cases}$$

Finally, as earlier mentioned, a block composer module BC within the DBUS module reconstructs the video at its original resolution by recombining all up sampled blocks together, frame by frame. Optionally, blending or a de-blocking filter can be further used afterwards to smoothen transitions between blocks that were up sampled using different LR/HR patches pairs from the dictionary or simply based on the predefined up sampling filter.

The MLM of the sender comprises a receiver virtualization module, denoted VM, adapted to perform the same operations as the Receiver regarding the video de-capsulation, decoding, and video reconstruction. To this purpose VM thus comprises a receiving unit RU, similar to the one of the receiver, a decoder similar to the decoder of the receiver and a video reconstruction module DBUS similar to the one of the receiver. Part of the module DBUS of the VM in the sender, is thus a dictionary, which is to map the dictionary MR of the receiver as close as possible. This module also receives the same information from OP as the one provided to the receiver , e.g. information concerning encoder choice, pre-processing information, up-sampling factor, dictionary size etc. In order not to overload the drawings, the signal between OP and VM providing this information is not shown.

In an embodiment the MLM of the sender may comprise as many VM modules as the number of receivers it is connected to . It is in this respect also possible to have an associated encoder per VM.

The buildup of the dictionary within VM, thus the population of the memory MR of DBUS in the sender, as well as the MR in the DBUS module in the receiver, can be further tuned. Based on the operational point corresponding to the receiver device capabilities, earlier determined by OP, or possibly changed during the course of operation by OP, the size of the dictionary MR in the receiver and thus also to the one in DBUS may be limited to a maximum value MRm, e.g. as determined in the table 1 earlier shown. This value MRm is being communicated by OP to a control unit COSTS of the memory M. In order not to overload the drawing, this communication between OP and COST is not shown on fig. 1c. M can also receive this information directly from OP (also not shown on the drawings), and can further add this value as metadata to the selected blocks, when providing the blocks to the encoder.

Alternatively OP can also directly communicate this value to the receiver, e.g. via a bi-directional signaling signal between OP and FR in the receiver. Such a bi-directional signaling channel is for instance shown in fig. 1d, between OP in the sender and FR in the receiver. FR will then further provide this value to DBUS, as indicated by the arrow from FR to DBUS in Fig. 1d. OP will also provide this data to VM in the sender, either directly, either via the module COST . Or VM can extract the information from the metadata in the received encoded stream.

Because the contents of the receiver dictionary MR is learned during operation of the sender, thus during the encoding itself, the dictionary MR in the receiver is actually updated from frame to frame. It is desirable that the blocks contained in the receiver dictionary are such as to guarantee a good video reconstruction, while at the same time having a limited number of entries in this receiver dictionary, this limit being the maximum MRm. The reason for this maximum is due to the power consumption limitations in the receiver, as a larger memory will require more search actions, and thus more power consumption.

In a very simple embodiment, MR can just be a FIFO memory having this maximum number MRm entries, and every extra incoming high resolution block above this limit will cause the oldest entry to disappear.

In a more sophisticated embodiment, specific metadata are further provided in addition to MRm , together with the transmitted blocks, to cleverly control the build-up of the dictionary in the receiver, and in the VM module in the sender. These metadata are generated by a control module COSTS coupled to the large memory M. M will receive these metadata from COSTS and can then provide these metadata together with the provision of the selected HRBs block. This embodiment is shown in Fig. 1c and d.

In the embodiment of figs. 1c-d to each block selected for transmission to the receiver and potential storage in the dictionary MR, a priority index is associated that is updated frame by frame. This priority index assigns a value of 0 to the most used block in the dictionary, a value of 1 to the second one and M-1 to the least used block for the up sampling of the blocks in the current video frame. The testing of which is the most used block can also be performed within the module COSTS associated to M, as M contains N blocks per frame, and M exactly knows which blocks it has provided to the encoder, and thus to the receiver.

When the receiver dictionary MR will receive a new HRBsr block for storage , it will first check whether the upper limit of MRm entries has been reached. In the latter case, thus when MR in the receiver already contains MRm high resolution blocks, the block with the least priority index is removed. This action is also performed in the copy of the MRm in DBUS at the sender. To do so, when sending the new block, by M, a flag is provided by M to the encoder which can accordingly add this priority index as metadata related to this block e.g. for incorporation in the NAL unit header of the picture associated to the block. This flag thus indicates to flush the block with the lowest priority index in the dictionary when including the new one, in case of overflow

In an even more sophisticated embodiment another flag, called transmitted_flag, is associated to a block and updated in M, each time a block is sent to the Receiver. This flag indicates whether the block in M has been transmitted to the Receiver (value of 1), otherwise its value is zero.

A receiver_index flag may also be attached to a block transmitted by M to the receiver, this index is assigned to each patch that has been transmitted to the Receiver in transmission order. This means that the first patch at the Receiver has a receiver index equal to 0, the second transmitted patch has an index equal to 1 etc.

The Memory M then transmits the blocks with associated flags and indexes to the encoder for encoding and further transmission. Within the decoder of the receiver, these flags are extracted either by RU or by D, and are provided to DBUS. A similar and parallel action is performed in VM in the sender.

An exemplary extract of code is provided here below :

o For each patch pi in the Sender dictionary M, with priority_index(pi,t) the priority index at previous frame and priority_index (pi, t+1) the priority index of pi at the current frame,

  ▪ if (transmitted_flag(pi)==1 && priority_index(pi,t)!= priority_index(pi,t+1))

    • send pair {received_index(pi), priority_index(pi,t+1)}

The advantage of the priority_index at the receiver side is that when searching in the dictionary for each block of the RRVr received for the best matching block of the receiver dictionary MR, this search can now be done in increasing priority_index order and stopped when a similarity threshold, which is to be sent to the receiver too, is reached. This similarity threshold may be sent via the bi-directional signaling channel between S and R , such as in the embodiment of Fig. 1d, or, alternatively also as additional metadata with the encoded stream.

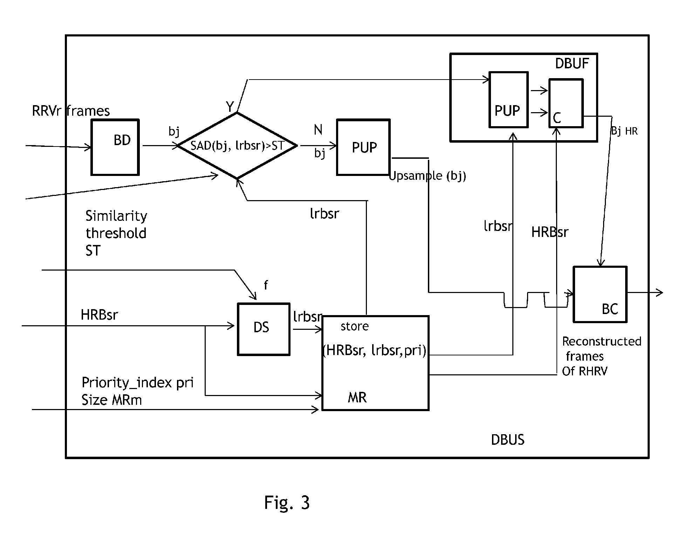

Fig. 3 shows an embodiment of DBUS receiving these extra input parameters MRm, priority index and ST. ST is the similarity threshold, for determining the matching between a reduced resolution block of RRVr and the Irbsr, being the down-sampled HRBsr blocks in the dictionary.

Searching in MR in this way , based on the priority indices, saves lots of processing power when evaluating the similarity even with Sum of Absolute Differences which otherwise might be costly as it is done for each block of the received video. The comparison threshold, ST, is determined by OP the Sender side may be transmitted to the Receiver at the initialization of the transmission as well as each time this threshold needs to be modified. Alternatively this can be provided as metadata in the encoded stream too.

The adaption of this threshold ST can be made based on for example a state machine that aims at reducing battery consumption at the receiver side while maintaining a good PSNR value at the Sender, e.g. using the earlier mentioned table 1.

The maximum size MRm of the dictionary in VM at the sender, and thus also of the dictionary MR at the receiver, can also be adapted by the OP in order to either further reduce the processing power of the receiver or improve the quality of the reconstruction evaluated by e.g using the PSNR value at the Sender. In an example following decisions can then be made by OP :

```
if ((PSNR>PSNR_min) AND (battery_lifetime < threshold){
Set_dictionary_size_to_min();
increase dictionary similarity threshold();
decrease block frequency();
}
If ((PSNR<PSNR_min) AND (battery_lifetime > threshold)){
set_dictionary_size_to_max();
decrease dictionary similarity threshold();
increase block frequency();
}

If ((PSNR<PSNR_min) AND (battery_lifetime < threshold)){
set_dictionary_size to_min();
increase dictionary similarity threshold();
increase block frequency();
}
If ((PSNR>PSNR_min) AND (battery_lifetime > threshold)){
continue();
}
```

For example, the PSNR_min can be set at 34dB, the threshold for the battery lifetime can be set to 30%.The functions "set_dictionary_size_to_max()" and "set_dictionary_size_to_min()" respectively adapt the size M of the dictionary at the receiver and in the virtualized module to the maximum value set in the operational point and to a minimum value that can for example be specified as the half of the maximum value.

Decreasing the block frequency can for instance be realized by sending less selected blocks to the receiver.

This means that the total number of block pairs in the dictionary can be reduced in order to lower the processing power needs of the DBUS. This mechanism, compared to adapting the similarity threshold for finding the best dictionary pair for a given block, actually reduces the processing power due to the blocks which cannot be up sampled by the DBUS and that still require a comparison with all pairs in the dictionary, although a high similarity threshold is set. Hence the adaption of the used dictionary size enables the minimization of processing of the worst case blocks, while the similarity threshold enables the minimization of the average blocks. The proportion of the worst case blocks compared to the total number of blocks is content dependent.

As earlier mentioned, high resolution does not only mean high spatial resolution, but can also relate to a high Temporal resolution. This means that, compared to the previously discussed used case, the input video has a higher frame rate (e.g. 24, 30, 50, 60, 120 fps, etc) . The down-sampling operation at the sender device will reduce the frame rate by either performing a simple reduction of the number of frames in a dyadic manner or with a simple averaging filter in order to avoid temporal aliasing. blocks sent by the sender device can now also be selected on dropped original frames.

The PUP of the receiver device includes now a temporal super-resolution block that interpolates frames at the original target frame rate with either a linear interpolation filter. DBUS may comprise an adaptive filter learnt from the patches. The PUP is here achieved by using motion-compensated interpolation. In the example of a upsampling by a factor 2, the frame at time t2 needs to be interpolated from frames at time t1 and t3 with this relationship:

$$t2 = t1 + (t3-t1)/2$$

Each frame block bij of the frame to be interpolated is obtained as follows:

$$bij(x,y,t2)=f1*bij(x+vijx/2,y+vijy/2,t1)+f2* bij(x-vijx/2,y-vijy/2,t3)$$

where vij={vijx, vijy} is the motion vector defined between the block bij at time t1 and corresponding block bkl at time t3, and with f1 and f2 generally set equal to ½.

Motion vectors can be estimated by the same algorithms as the ones used for motion estimation and motion compensation in H.264/AVC or H.265/HEVC, or by optical flow algorithms. The use of a linear approximation of the motion vector at t2 (i.e.e vijx/2, vijy/2) is based on the assumption that the optical flow between blocks at frames t1 and t3 is linear. In case t1 and t3 are distant to each other, the assumption is less and less valid and the probability of occlusions (data present in one frame but not in the other) is higher.

Another use case deals with high bit-depth resolution, meaning that the high resolution input video will have higher bit depth values, typical of High Density Resolution content (for example 10 or 12 bits per color channel instead of 8). In this case, the sender device may use tone mapping to remap the original high bit depth content to 8 bit content. Blocks are sent with full bit-depth content. The receiver device uses inverse tone mapping techniques that can be improved by machine learning by observing the received patches.

Noting the luminance for each pixel of the HDR source $L_{HDR}$:

$$L_{HDR} = 0.213\ R_{HDR} + 0.715\ G_{HDR} + 0.072 B_{HDR}$$

where $R_{HDR}$, $G_{HDR}$ and $B_{HDR}$ are the red, green and blue components of the HDR content.

Noting Ld, Rd, Gd and Bd the luminance, red, green, and blue components of pixels at the downsampled source, we have for each pixel:

$$Ld(x,y) \; = \; \frac{(s \,/\, m_{HDR})\, L_{HDR}(x,y)}{1 + (s \,/\, m_{HDR})\, L_{HDR}(x,y)}$$

Where s is a parameter that enables to amplify contrast, $m_{HDR}$ is the average of $L_{HDR}$ over all pixels in a frame, which can be for example taken as the geometric average:

$$m_{HDR} \; = \; exp(\frac{1}{M} \sum_{x,y} \log\,(\varepsilon + L_{HDR}(x,y))).$$

Where M is the number of pixels of the frame and epsilon is typically a small and non-negative value.

The PUP is then performed by inversing this transform.

$$L_{HDR}(x,y) = \frac{L_d(x,y) m_{HDR}}{s\,(1 - L_d(x,y))}$$

For pixels contained in blocks that are similar to patches that have been included in the dictionary, the upsampling filter becomes

$$L_{HDR}(x,y) = \frac{L_d(x,y) m_{HDR}}{s\,(1 - L_d(x,y))} + \left( L_{HDR}^{p}(x,y) - \frac{L_d^{p}(x,y) m_{HDR}}{s\,\left(1 - L_d^{p}(x,y)\right)} \right)$$

Where $L^{p}_{HDR}$ and $L^{p}_{d}$ are respectively the HDR and downsampled versions of the dictionary patch pixels.

In a fourth use case 4, the original high resolution input video has a high color resolution. The original high resolution video content might be captured at YUV 4:4:4 while it would be desirable to only send YUV 4:2:0. In this case, chroma linear filtering is applied in the receiver, improved via machine learning based on observations made on patches sent at full chroma resolution.

Chrominance values downsampled at the 4:2:0 format can be upsampled back to 4:4:4 format by using a well-known FIR filter (PUP) such as:

$$f = \begin{bmatrix} -1 & 0 & 9 & 16 & 9 & 0 & -1 \end{bmatrix}$$

which is applied on the available chroma samples in order to estimate the missing chroma samples.

The dictionary-based upsampling uses for each block bij similar to the low chroma resolution pij of a full resolution chroma patch Pij in the dictionary an upsampling filter as follows:

$$\mathrm{Bij}(x,y) = \text{upsampling }(\mathrm{bij}) + (\mathrm{Pij} - \text{upsampling}(\mathrm{pij}))$$

Where the upsampling is implemented using the PUP filter f.

In the claims hereof any element expressed as a means for performing a specified function is intended to encompass any way of performing that function. This may include, for example, a) a combination of electrical or mechanical elements which performs that function or b) software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for, and unless otherwise specifically so defined, any physical structure is of little or no importance to the novelty of the claimed invention. Applicant thus regards any means which can provide those functionalities as equivalent as those shown herein.

While the principles of the invention have been described above in connection with specific apparatus, it is to be clearly understood that this description is made only by way of example and not as a limitation on the scope of the invention, as defined in the appended claims.

## Claims

1. Sender device (S) adapted to receive a high resolution video (HRV) and to generate a reduced resolution video (RRV) by down sampling said high resolution video (HRV), said sender device further being adapted, to select successive high resolution blocks (HRBjs) from successive frames of said high resolution video (HRV), and to encode said reduced resolution video (RRV) and said selected successive high resolution blocks (HRBs) for further transmission to a receiver device (R), said sender device (S) further being adapted to control the down sampling of said high resolution video as being dependent upon a feedback signal from said receiving device, said feedback signal comprising information related the remaining battery lifetime of said receiving device, said sender device further being operational to adapt the selection of said successive high resolution blocks based on said feedback signal.

2. Sender device (S) according to claim 1 further being adapted identify further parameters to be provided (pri) with said selected successive high resolution blocks for further transmission to said receiver, said parameters enabling the build-up of a high resolution block dictionary (MR) at said receiver (R) taking into account receiver restrictions.

3. Sender device (S) according to claim 1 or 2 further being adapted to receive bandwidth information concerning the bandwidth of the communication link between the sender device and said receiver device, and to adapt the downsampling and/or the block selection based on said bandwidth information.

4. Sender device (S) further being adapted to emulate the reconstruction of the received high resolution video at the receiver, for comparing the emulated reconstructed video with the original high resolution video, and for further adapting the down sampling factor and/or the high resolution block selection based on said comparison result (PSNR).

5. Sender device (S) according to claim 4 further being adapted to emulated the reconstruction of the received high resolution video in the receiver for each receiver to which the sender is coupled to.

6. Sender device (S) according to any of the previous claims 1-5 further being adapted to provide further metadata information concerning the down sampling and encoding and the build-up of said high resolution block memory to said receiver device.

7. Receiving device (R) adapted to decode a received encoded video stream (ERRVBr) received from a sender device (S), into a received low resolution video stream (RRVr) and successive high resolution blocks (HRBsr), said receiving device (R) being adapted to reconstruct a high resolution video stream from said successive high resolution blocks (HRBsr) and said received low resolution video stream (RRVr) by comparing blocks of frames of said received low resolution video stream (RRVr) with a down-sampled version (Irbsr) of said successive high resolution blocks (HRBsr), such that, in case there is a correspondence, a reconstructed block will be generated based upon said at least one high resolution block (HRBsr), said receiver device (R) further being adapted to provide information related to the remaining battery life time of said receiver device to said sender device.

8. Receiving device (R) according to claim 7, further being adapted to store said successive received high resolution blocks.

9. Method for compression of a high resolution video by a sender device (S) said method comprising the steps of generating a reduced resolution video (RRV) by down sampling said high resolution video (HRV), and to select successive high resolution blocks (HRBjs) from successive frames of said high resolution video , to encode said reduced resolution video (RRV) and said selected successive high resolution blocks (HRBs) for further transmission to a receiver device (R), whereby the down sampling of said high resolution video is dependent upon a feedback signal from said receiving device, said feedback signal comprising information related to the remaining battery lifetime of said receiving device, and whereby the selection of said successive high resolution blocks is further based on said feedback signal.

10. Method for reconstructing a high resolution video stream from an encoded video stream (ERRVBr) received from a sender device (S), said method comprising a step of decoding said received encoded video stream (ERRVBr) into a received low resolution video stream (RRVr) and successive high resolution blocks (HRBsr) selected by said sender device (S), said receiving device (R) being adapted to reconstruct said high resolution video stream from said successive high resolution blocks (HRBsr) and said received low resolution video stream (RRVr) by comparing blocks of frames of said received low resolution video stream (RRVr) with a down-sampled version (Irbsr) of said successive high resolution blocks (HRBsr), such that, in case there is a correspondence, a reconstructed block will be generated based upon said at least one high resolution block (HRBsr), said method further comprising a step of providing information related to the remaining battery life time of said receiver device to said sender device for enabling the sender device to control the selection of said high resolution blocks.

11. A computer program adapted to perform the method of claims 9 or 10.

12. Computer readable storage medium comprising instructions to cause a data processing apparatus to carry out the program of claim 11.

Fig. 1a

Fig. 1b

Fig. 1c

Fig. 1d

Fig. 2

Fig. 3

Europäisches
Patentamt

European
Patent Office

Office européen
des brevets

# EUROPEAN SEARCH REPORT

Application Number

EP 14 30 7118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/177706 A1 (FERNANDES FELIX C [US] ET AL) 26 June 2014 (2014-06-26) * paragraphs [0030] - [0072], [0119] - [0128] * | 1-12 | INV. H04N21/2343 H04N21/24 H04N21/442 H04N21/443 H04N21/6336 H04N21/6379 H04N21/845 H04N19/46 H04N19/132 H04N19/156 H04N19/164 ADD. H04N21/4728 |
| Y | FR 2 999 373 A1 (FRANCE BREVETS [FR]) 13 June 2014 (2014-06-13) * the whole document * | 1-12 | |
| Y | EP 2 680 221 A1 (ALCATEL LUCENT [FR]) 1 January 2014 (2014-01-01) * paragraphs [0006] - [0021], [0027] - [0057] * | 1-12 | |
| Y | US 2008/062018 A1 (NORMILE JIM [US] ET AL) 13 March 2008 (2008-03-13) * paragraphs [0020], [0021], [0027], [0049] * | 1-12 | |
| Y | US 2006/215755 A1 (JU CHI-CHENG [TW]) 28 September 2006 (2006-09-28) * paragraphs [0022] - [0024] * | 1-12 | |
| Y | US 2011/268186 A1 (MUKHERJEE DEBARGHA [US] ET AL) 3 November 2011 (2011-11-03) * paragraphs [0014] - [0054] * | 1-12 | |
| Y | US 2009/232480 A1 (JENDBRO MAGNUS [SE]) 17 September 2009 (2009-09-17) * paragraphs [0069] - [0074] * | 1-12 | |
| Y | US 2012/195356 A1 (YI FENG [US] ET AL) 2 August 2012 (2012-08-02) * paragraphs [0010], [0012] * | 1-12 | |
| Y | US 2009/067491 A1 (SUN XIAOYAN [CN] ET AL) 12 March 2009 (2009-03-12) * paragraphs [0018] - [0045] * | 1-12 | |

TECHNICAL FIELDS
SEARCHED        (IPC)

H04N

The present search report has been drawn up for all claims

| Place of search | Date of completion of the search | Examiner |
|---|---|---|
| Munich | 20 April 2015 | Sanahuja, Francesc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 7118

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2015

| Patent document cited in search report | | Publication date | Patent family member(s) | | Publication date |
|---|---|---|---|---|---|
| US 2014177706 | A1 | 26-06-2014 | NONE | | |
| FR 2999373 | A1 | 13-06-2014 | FR 2999373 A1 | | 13-06-2014 |
| | | | WO 2014090950 A1 | | 19-06-2014 |
| EP 2680221 | A1 | 01-01-2014 | CN 104395928 A | | 04-03-2015 |
| | | | EP 2680221 A1 | | 01-01-2014 |
| | | | WO 2014001243 A1 | | 03-01-2014 |
| US 2008062018 | A1 | 13-03-2008 | EP 2070331 A2 | | 17-06-2009 |
| | | | EP 2410750 A2 | | 25-01-2012 |
| | | | JP 4865864 B2 | | 01-02-2012 |
| | | | JP 5404722 B2 | | 05-02-2014 |
| | | | JP 2010503349 A | | 28-01-2010 |
| | | | JP 2012034389 A | | 16-02-2012 |
| | | | KR 20090075686 A | | 08-07-2009 |
| | | | US 2008062018 A1 | | 13-03-2008 |
| | | | US 2009073005 A1 | | 19-03-2009 |
| | | | US 2011234430 A1 | | 29-09-2011 |
| | | | US 2015003515 A1 | | 01-01-2015 |
| | | | WO 2008033830 A2 | | 20-03-2008 |
| US 2006215755 | A1 | 28-09-2006 | CN 1838772 A | | 27-09-2006 |
| | | | US 2006215755 A1 | | 28-09-2006 |
| US 2011268186 | A1 | 03-11-2011 | NONE | | |
| US 2009232480 | A1 | 17-09-2009 | US 2009232480 A1 | | 17-09-2009 |
| | | | WO 2009112896 A2 | | 17-09-2009 |
| US 2012195356 | A1 | 02-08-2012 | NONE | | |
| US 2009067491 | A1 | 12-03-2009 | US 2009067491 A1 | | 12-03-2009 |
| | | | WO 2009033119 A1 | | 12-03-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAES, F. ; COLLIGNON, A. ; VANDERMEULEN, D. ; MARCHAL, G. ; SUETENS, P.** Multimodality image registration by maximization of mutual information. *Medical Imaging, IEEE Transactions on,* 1997, vol. 16 (2), 187-198

- **LEWIS, J. P.** Fast normalized cross-correlation. *Vision interface,* May 1995, vol. 10 (1), 120-123